# EUROPEAN PATENT APPLICATION

(11) **EP 1 426 852 A1**
(43) Date of publication of application: **09.06.2004**
(21) Application number: 02445169.2
(22) Date of filing: 05.12.2002
(51) Int. Cl.: G06F 1/30

(54) **Method for automatic restart of device and device with automatic restart**

(71) Applicant: Sony Ericsson Mobile Communications AB, 221 88 Lund (SE)
(72) Inventor: Örthagen, Sven, 245 41 Staffanstorp (SE)
(74) Representative: Akerman, Marten Lennart

(57) **Abstract**

The invention relates to a method for automatic restart of a device and such a device. The device comprises circuitry (1) powered by a battery (2) and including various components such as logic circuits and memory circuits. The method comprises the steps of:
monitoring the power supplied to the circuitry for interruptions;
if there is an interruption, timing the duration of the interruption;
attempting to restart the device, as long as the duration of the interruption is shorter than a predefined time value, suitably by running a restart program. Thus, the device responds to a voltage drop in the power supply by performing an automatic restart within a predefined time limit. The device may be a mobile telephone.

## Description

### Field of the invention

The present invention relates to a method for automatic restart of a device and such a device. The device responds to a voltage drop in the power supply by performing an automatic restart within a predefined time limit. The device may be a mobile telephone.

### State of the art

It happens with today's mobile telephones that the telephone is unintentionally switched off because the power supply has been interrupted, e.g. due to contact bounces. During the interruption the telephone can not receive calls and also information shown on the phone's display will be lost. Also, to restart the phone the user has to go through the whole procedure involving entering PIN-codes and the like.

### Summary of the invention

The present invention solves inter alia the above problem by introducing a monitoring function, monitoring the power supply for interruptions. In case there is an interruption, the phone will be restarted by means of a shorter procedure not involving the user and preferably, all information is shown on the display as before the interruption. The restart should occur within a time limit.

In a first aspect the invention provides a method for automatic restart of a device comprising circuitry powered by a battery and including various components such as logic circuits and memory circuits. The method comprises the steps of:
monitoring the power supplied to the circuitry for interruptions;
if there is an interruption, timing the duration of the interruption;
attempting to restart the device, as long as the duration of the interruption is shorter than a predefined time value, suitably by running a restart program.

In one embodiment, the method further comprises the steps of monitoring the actuation of a power switch; defining that there is an interruption when the power is switched off by means of the power switch; and, only if there is a manual attempt to start the device as long as the duration of the interruption is shorter than the predefined time value, running a restart program.

Preferably, the method includes storing settings of the device in a memory, and restarting the device with the same settings.

The settings may include temporary settings, such as symbols shown on a display of the device.

In a further embodiment, the method further comprises the steps of monitoring the voltage of the battery for voltage drops, and defining that there is an interruption when the voltage of the battery drops below a predefined value.

The voltage of the battery may be monitored at terminals of the circuitry or at a well-defined point in the circuitry.

The power supply may be temporarily maintained by a capacitor.

Suitably, the predefined time value is 1 second.

In a second aspect the invention provides a device with automatic restart, the device comprising circuitry powered by a battery and including various components such as logic circuits and memory circuits, and further:
monitor means for monitoring the power supplied to the circuitry for interruptions; timer means arranged to time the duration of an interruption;
restart means arranged to attempt to restart the device, as long as the duration of the interruption is shorter than a predefined time value.

Suitably, the restart means include a restart program.

In one embodiment, the device further includes a power switch, wherein the monitor means further is arranged to monitor the actuation of the power switch; to define that there is an interruption when the power is switched off; and to detect if there is a manual attempt to start the device as long as the duration of the interruption is shorter than the predefined time value; and only if such an attempt is detected, command running of the restart program.

Preferably, the device comprises a memory storing settings of the device; wherein the restart means is arranged to restart the device with the same settings.

The settings may include temporary settings, such as symbols shown on a display of the device.

In a further embodiment, the monitor means is arranged to monitor the voltage of the battery for voltage drops, and to define that there is an interruption when the voltage of the battery drops below a predefined value.

The monitor means may be connected to battery terminals of the circuitry or to a well-defined point in the circuitry.

The device may comprise a capacitor for temporarily maintaining the power supply.

Suitably, the predefined time value is 1 second.

The device may be a portable telephone, a pager, a communicator, a smart phone, or an electronic organiser.

### Brief description of the drawings

The invention will be described in further detail below with reference to the accompanying drawing in which the only figure is a block diagram of the components of the invention.

### Detailed description of preferred embodiments

The invention will be described in detail with a mobile telephone as an example. The invention is equally applicable in other devices such as pagers, communicators, smart phones and electronic organisers.

A lot of telephones are found unintentionally switched off in pockets and handbags. This causes trouble for the users since they trust upon the equipment and feel comfortable and secure in being always connected to the network.

Today the mobile telephones are connected to a battery by pogopins, leaf springs or similar spring biased contacts. When the contacts are worn they become more sensitive and when the phone is exposed to vibrations, shaking or other physical violence, i.e. drop on the floor, contact bounces may occur and the phone is switched off. This is of course undesired since the phone is disconnected from the network and the user can not receive any calls. It may take some time before the user notices that the telephone is switched off. Also, information shown on the display, such as information about missed calls, new messages etc. is usually lost when a telephone is switched off. Moreover, the user has to restart the phone and go through the procedure of entering a PIN-code in order to be connected again. This is time consuming and annoying for the user, especially if he is in a hurry. Another possibility is that the user himself has accidentally switched off the telephone, which may very well happen if the user presses too long on a button or accidentally presses the wrong button when answering a call.

As outlined above, there are two types of unintentional power interruption. The first type is when the battery is temporarily disconnected from the circuitry of the phone, e.g. because of contact bounce. This is always undesired and should trigger an automatic restart of the telephone. The automatic attempts to restart the telephone should cease after a time limit that is set so that it is not possible to change the battery and then go into the automatic restart procedure.

The other type is when the power switch of the phone is accidentally depressed so that the phone is switched off. In this case, even if the telephone is disconnected, certain parts of the telephone are still supplied by sufficient power, such as data bases containing phone books and stored messages, the clock etc. However, when switched on again the phone usually does not retain its temporary settings but is restarted in a default mode. If the switching off was unintentional the user will most likely attempt to start the phone again immediately and a shorter restart procedure is desired. On the other hand, if the switching off was intended it should not be possible to use the restart procedure because of safety reasons and the shorter restart procedure should not be available. There should be a time limit within which the user must attempt to start the telephone.

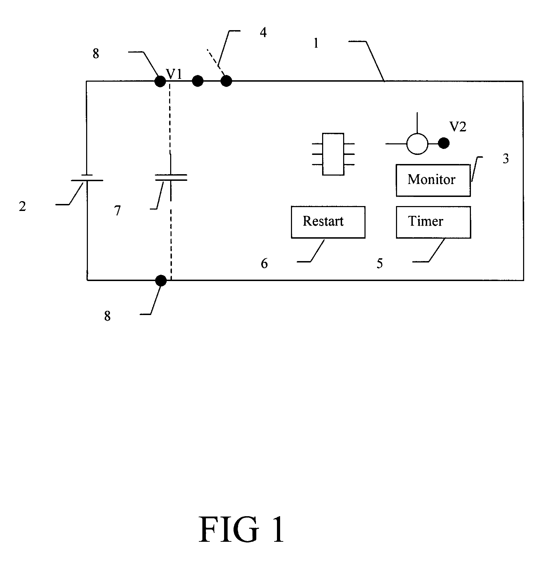

Fig. 1 shows a diagram of relevant components of a telephone according to the present invention. The telephone comprises electronic circuitry containing electronic components, memories that store software and databases including permanent and temporary settings, telephone books, images, messages etc. The circuitry 1 is connected a battery 2 at terminals 8. Any contact bounce will occur in this point. The telephone is also provided with a power switch 4 disconnecting the circuitry from the battery, or rather switching certain parts of the circuitry into an inactive state. In fact, the battery is still connected and supplies power to certain parts.

If the battery is disconnected from the circuitry, by accident or otherwise, the voltage over the circuitry will drop in dependence on the capacitance at the point in question. For instance, a voltage V1 can be measured at the terminal 8 or a voltage V2 can be measured at some well-defined point in the circuitry. What is important is that such a point is selected that an interruption of the power supply can be determined, e.g. if the time behaviour of the voltage decay is well known. When the voltage V1, V2 drops below a threshold VT an interruption if declared and a timer 5 is started. The voltage is monitored by monitoring means 3 having a suitable connection to the voltage point selected.

If the circuitry has low capacitance, a special capacitor 7 may be connected between the terminals to maintain the voltage for a suitable time as desired.

If there is a true interruption of the power supply, in case of contact bounce or the like, the timer starts to time the duration from the beginning of the interruption, i.e. as soon as the measured voltage has fallen below the threshold VT. If the power returns again a restart program is run. In an alternative embodiment, the restart program is run repeatedly, and if the power has returned the telephone will be restarted. In both cases, if the duration since the beginning of the interruption is longer than a time limit T0, it should no longer be attempted to restart the telephone. This is because it should not be possible to manipulate the telephone by changing the battery and then obtain an automatic restart without involving entering of safety codes etc.

Particularly, it must not be possible to change the SIM card (Subscriber Identity Module) while the battery is disconnected and then restart without inserting a PIN code.

Preferably, the phone should return to the exact mode in which it was before the interruption. Thus, all temporary settings such as ring signals, silent mode, symbols showing missed calls and new messages should be retained. Of course, all the more permanent setting are retained as usual.

In case of an accidental switch off performed by the user, the procedure will be a little different. First, it must be detected that the switch off button is activated, e.g. by setting a flag. If this flag is set the restart program is not entered just because the voltage V1, V2 has dropped below the threshold VT. Still the time is measured from when the phone was switched off. If the user attempts to the start the phone again within a time limit, the restart program is run so that the user obtains the shorter automatic procedure, which does not involve entering the safety code, thus saving time. The time limit may suitably be the same as the time limit T0, or possibly longer to account for the fact that it takes a little while for the user to notice that he inadvertently switched off the phone. If on the other hand the user waits past the set time limit the phone will be started with the normal procedure.

The time limit T0 for entering the restart program is suitably in the order of seconds, such as three seconds or preferably as low as one second.

During the power interruption the mobile telephone will be disconnected from the telecommunications network as is currently unavoidable. The phone will have to go through the usual connection procedure similar to an ordinary start even if the phone is restarted automatically. However, the automatic restart connection procedure to the network does not involve any actions of the user.

The invention may be implemented with various combinations of hardware and software. The scope of the invention is only limited by the claims below.

## Claims

1. A method for automatic restart of a device comprising circuitry (1) powered by a battery (2) and including various components such as logic circuits and memory circuits, **characterised by** the steps of:
monitoring the power supplied to the circuitry for interruptions;
if there is an interruption, timing the duration of the interruption;
attempting to restart the device, as long as the duration of the interruption is shorter than a predefined time value.

2. A method according to claim 1, **characterised by** attempting to restart the device by running a restart program.

3. A method according to claim 2, **characterised by** monitoring the actuation of a power switch (4); defining that there is an interruption when the power is switched off by means of the power switch (4); and, only if there is a manual attempt to start the device as long as the duration of the interruption is shorter than the predefined time value, running the restart program.

4. A method according to claim 1, 2 or 3, **characterised by** storing settings of the device in a memory;
restarting the device with the same settings.

5. A method according to claim 4, **characterised in that** the settings include temporary settings, such as symbols shown on a display of the device.

6. A method according to any one of the preceding claims, **characterised by** monitoring the voltage of the battery (2) for voltage drops, and defining that there is an interruption when the voltage of the battery drops below a predefined value.

7. A method according to claim 6, **characterised in that** the voltage (VI) of the battery is monitored at terminals (8) of the circuitry (1).

8. A method according to claim 6, **characterised in that** the voltage of the battery is monitored at a well-defined point (V2) in the circuitry.

9. A method according to any one of the preceding claims, **characterised in that** the power supply is temporarily maintained by a capacitor (7).

10. A method according to any one of the preceding claims, **characterised in that** the predefined time value is 1 second.

11. A device with automatic restart, the device comprising circuitry (1) powered by a battery (2) and including various components such as logic circuits and memory circuits, **characterised by**:
monitor means (3) for monitoring the power supplied to the circuitry (1) for interruptions;
timer means (5) arranged to time the duration of an interruption;
restart means (6) arranged to attempt to restart the device, as long as the duration of the interruption is shorter than a predefined time value.

12. A device according to claim 11, **characterised in that** the restart means (6) include a restart program.

13. A device according to claim 12, **characterised in that** the device includes a power switch (4), wherein the monitor means further is arranged to monitor the actuation of the power switch; to define that there is an interruption when the power is switched off; and to detect if there is a manual attempt to start the device as long as the duration of the interruption is shorter than the predefined time value; and only if such an attempt is detected, command running of the restart program.

14. A device according to claim 11, 12 or 13, **characterised by** a memory storing settings of the device; wherein the restart means (6) is arranged to restart the device with the same settings.

15. A device according to claim 14, **characterised in that** the settings include temporary settings, such as symbols shown on a display of the device.

16. A device according to any one of claims 11 to 15, **characterised in that** the monitor means is arranged to monitor the voltage of the battery (2) for voltage drops, and to define that there is an interruption when the voltage of the battery drops below a predefined value.

17. A device according to claim 16, **characterised in that** the monitor means is connected to battery terminals (8) of the circuitry.

18. A device according to claim 16, **characterised in that** the monitor means is connected to a well-defined point (V2) in the circuitry.

19. A device according to any one of claims 11 to 18, **characterised by** a capacitor (7) for temporarily maintaining the power supply.

20. A device according to any one of claims 11 to 19, **characterised in that** the predefined time value is 1 second.

21. A device according to any one of claims 11 to 20, **characterised in that** the device is a portable telephone, a pager, a communicator, a smart phone, or an electronic organiser.
